(19)

Europäisches
Patentamt
European
Patent Office
Office européen
des brevets

(11) **EP 4 625 362 A1**

## (12) EUROPEAN PATENT APPLICATION

(43) Date of publication:
**01.10.2025 Bulletin 2025/40**

(21) Application number: **25187016.8**

(22) Date of filing: **02.07.2025**

(51) International Patent Classification (IPC):
**G06V 20/56** *(2022.01)*

(52) Cooperative Patent Classification (CPC):
**G06V 20/588**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.07.2024 CN 202410892307**

(71) Applicant: **Nanjing Horizon Information
Technology Co., Ltd.
Nanjing, Jiangsu 210046 (CN)**

(72) Inventors:
• **Borui, ZHAO
Jiangsu, 210046 (CN)**
• **Yingqian, ZHAO
Jiangsu, 210046 (CN)**

(74) Representative: **Patentanwälte Magenbauer &
Kollegen
Partnerschaft mbB
Plochinger Straße 109
73730 Esslingen (DE)**

(54) **METHOD AND APPARATUS FOR DETECTING LANE LINE INTERSECTION, DEVICE, AND STORAGE MEDIUM**

(57) A method for detecting a lane line intersection, a device, and a storage medium are disclosed, and relate to the field of intelligent driving technologies. The method includes: determining a to-be-detected image acquired by an ego vehicle during driving; processing the to-be-detected image based on a lane line intersection prediction model to obtain a lane line intersection category feature map; and determining coordinates and a category of a lane line intersection in the to-be-detected image based on the lane line intersection category feature map.

EP 4 625 362 A1

## Description

## TECHNICAL FIELD

The present disclosure relates to the field of intelligent driving technologies, and in particular, to a method and an apparatus for detecting a lane line intersection, a device, and a storage medium.

## BACKGROUND

For an intelligent driving system, target objects (including lane lines) in an actual driving environment of a vehicle typically need to be accurately perceived, to construct a road topology for driving of the vehicle, and then perform driving planning based on the road topology (including intersections of the lane lines). If the lane line intersections in the road topology cannot be accurately constructed, accuracy of the driving planning at downstream will be directly affected, thus affecting driving safety. Therefore, how to accurately detect a lane line intersection has become a technical problem that needs to be resolved urgently.

At present, lane line detection is performed on a acquired image mainly by using a lane line detection model, and a lane line intersection is determined based on a lane line detection result by means of geometric logic judgment. However, during detection of the lane line intersection by using the lane line intersection detection solution, detection accuracy depends on accuracy of the lane line detection model, which limits the detection accuracy. Meanwhile, there are a relatively small number of pixels at the lane line intersection too far away or too close in the acquired image, and thus it is difficult to effectively determine the lane line intersection from the lane line detection result by means of geometric logic judgment.

## SUMMARY

Typically, detection accuracy of a solution for detecting a lane line intersection depends on accuracy of a lane line detection model, and for a position at which a relatively small number of pixels exist, it is difficult to effectively determine a lane line intersection based on a lane line detection result. To resolve the abovementioned technical problem, the present disclosure provides a method and an apparatus for detecting a lane line intersection, a device, and a storage medium, which can resolve existing problems of limited accuracy of a solution for detecting a lane line intersection and failure to detect a lane line intersection.

According to a first aspect of the present disclosure, there is provided a method for detecting a lane line intersection, including: determining a to-be-detected image acquired by an ego vehicle during driving; processing the to-be-detected image based on a lane line intersection prediction model to obtain a lane line intersection category feature map; and determining coordinates and a category of a lane line intersection in the to-be-detected image based on the lane line intersection category feature map.

According to a second aspect of the present disclosure, there is provided a method for training a lane line intersection prediction model, including: determining a plurality of sample images, coordinates of a plurality of sample intersections corresponding to each of the sample images, and a sample category of each of the sample intersections; generating a sample heatmap based on the coordinates of the plurality of sample intersections and the sample category of each of the sample intersections; processing the sample image based on an initial lane line intersection prediction model to obtain a prediction lane line intersection category feature map; and performing iterative training on the initial lane line intersection prediction model by using the prediction lane line intersection category feature map as an initial training output of the initial lane line intersection prediction model and using the sample heatmap as supervisory information to obtain a trained lane line intersection prediction model.

According to a third aspect of the present disclosure, there is provided an apparatus for detecting a lane line intersection, including: a first determination module, configured for determining a to-be-detected image acquired by an ego vehicle during driving; a first processing module, configured for processing the to-be-detected image based on a lane line intersection prediction model to obtain a lane line intersection category feature map; and a second determination module, configured for determining coordinates and a category of a lane line intersection in the to-be-detected image based on the lane line intersection category feature map.

According to a fourth aspect of the present disclosure, there is provided an apparatus for training a lane line intersection prediction model, including: a third determination module, configured for determining a plurality of sample images, coordinates of a plurality of sample intersections corresponding to each of the sample images, and a sample category of each of the sample intersections; a generation module, configured for generating a sample heatmap based on the coordinates of the plurality of sample intersections and the sample category of each of the sample intersections; a second processing module, configured for processing the sample image based on an initial lane line intersection prediction model to obtain a prediction lane line intersection category feature map; and a training module, configured for performing iterative training on the initial lane line intersection prediction model by using the prediction lane line intersection category feature map as an initial training output of the initial lane line intersection prediction model and using the sample heatmap as supervisory information to obtain a trained lane line intersection prediction model.

According to a fifth aspect of the present disclosure, there is provided a non-transitory computer readable storage medium, on which a computer program is stored, where the computer program, when executed by a processor, causes the processor to implement the method for detecting a lane line intersection according to the first aspect, or the method for training a lane line intersection prediction model according to the second aspect.

According to a sixth aspect of the present disclosure, an electronic device is provided, including: a processor; and a memory, configured for storing instructions executable by the processor, where the processor is configured for reading the executable instructions from the memory and executing the executable instructions to implement the method for detecting a lane line intersection according to the first aspect, or the method for training a lane line intersection prediction model according to the second aspect.

According to a seventh aspect of the present disclosure, there is provided a computer program product, where instructions in the computer program product, when executed by a processor, causes the processor to implement the method for detecting a lane line intersection according to the first aspect or the method for training a lane line intersection prediction model according to the second aspect.

According to the method for detecting a lane line intersection provided in the embodiments of the present disclosure, because detection of a lane line intersection in a to-be-detected image is implemented based on a lane line intersection prediction model, detection accuracy of the detection of the lane line intersection depends on accuracy of the lane line intersection prediction model and is not limited by accuracy of a lane line detection model. In addition, the manner of detecting the lane line intersection by using the lane line intersection prediction model is not affected by a number of pixels of the lane line intersection that are too far away or too close, and therefore, can improve effectiveness of the detection of the lane line intersection.

**BRIEF DESCRIPTION OF DRAWINGS**

The foregoing and other objectives, features, and advantages of the present disclosure will become more apparent from the more detailed description of the embodiments of the present disclosure with reference to the accompanying drawings. The accompanying drawings are used for a further understanding of the embodiments of the present disclosure, constitute a part of this specification, are used together with the embodiments of the present disclosure to explain this application, and do not constitute a limitation to this application. In the accompanying drawings, same reference signs typically represent same components or steps.

FIG. 1 is a schematic flowchart illustrating a method for detecting a lane line intersection according to an embodiment of the present disclosure;

FIG. 2 is a schematic flowchart illustrating a method for detecting a lane line intersection according to another embodiment of the present disclosure;

FIG. 3 is a schematic flowchart illustrating a method for detecting a lane line intersection according to still another embodiment of the present disclosure;

FIG. 4 is a schematic flowchart illustrating a method for training a lane line intersection prediction model according to an exemplary embodiment of the present disclosure;

FIG. 5 is a schematic flowchart illustrating a method for training a lane line intersection prediction model according to another exemplary embodiment of the present disclosure;

FIG. 6 is a schematic flowchart illustrating a method for training a lane line intersection prediction model according to an another exemplary embodiment of the present disclosure;

FIG. 7 is a schematic diagram illustrating a composition structure of an apparatus for detecting a lane line intersection according to an exemplary embodiment of the present disclosure;

FIG. 8 is a schematic diagram illustrating a composition structure of an apparatus for detecting a lane line intersection according to another exemplary embodiment of the present disclosure;

FIG. 9 is a schematic diagram illustrating a composition structure of an apparatus for detecting a lane line intersection according to still another exemplary embodiment of the present disclosure;

FIG. 10 is a schematic diagram illustrating a composition structure of an apparatus for detecting a lane line intersection according to still another exemplary embodiment of the present disclosure;

FIG. 11 is a schematic diagram illustrating a composition structure of an apparatus for detecting a lane line intersection according to still another exemplary embodiment of the present disclosure;

FIG. 12 is a schematic diagram illustrating a composition structure of an apparatus for training a lane line intersection prediction model according to an exemplary embodiment of the present disclosure;

FIG. 13 is a schematic diagram illustrating a composition structure of an apparatus for training a lane line intersection prediction model according to another exemplary embodiment of the present disclosure;

FIG. 14 is a schematic diagram illustrating a composition structure of an apparatus for training a lane line intersection prediction model according to still another exemplary embodiment of the present disclosure; and

FIG. 15 is a schematic diagram illustrating a composition structure of an electronic device according to an exemplary embodiment of the present disclosure.

## DETAILED DESCRIPTION OF THE EMBODIMENTS

To explain the present disclosure, exemplary embodiments of the present disclosure will be described in detail below with reference to the accompanying drawings. Apparently, the described embodiments are merely some, not all, of embodiments of the present disclosure. It should be understood that, the present disclosure is not limited by the exemplary embodiments.

It should be noted that the relative arrangement of components and steps, numerical expressions, and numerical values set forth in these embodiments do not limit the scope of the present disclosure, unless otherwise specifically stated.

Overview of Application

For an intelligent driving system, a vehicle (that is, an ego vehicle) in an intelligent driving state needs to perceive target objects (including, for example, at least one of lane lines, traffic lights, sidewalks, or other objects) in a driving environment in real time through an in-vehicle camera, construct a driving road topology based on the perceived target objects, then plan a driving path based on the driving road topology, and then perform a corresponding operation to implement intelligent driving of the vehicle.

Typically, lane lines in the driving environment need to be perceived, it needs to be determined, based on the perceived lane lines, whether lanes are in a parallel state or a mutually intersecting state, and when it is determined that the lanes are in a mutually intersecting state, a position and a category of a lane line intersection are determined to obtain lane line intersection information. Finally, a driving road topology is constructed based on the lane line intersection information. Therefore, accuracy of the lane line intersection information directly affects accuracy of the constructed road topology, further affects accuracy of the driving planning at downstream, and finally affects driving safety of the vehicle. Therefore, how to accurately detect a lane line intersection has become a technical problem that needs to be resolved urgently.

At present, lane line detection is performed, mainly by using a lane line detection model, on an image acquired in real time during vehicle driving, and a lane line intersection is determined based on a lane line detection result by means of geometric logic judgment. However, during detection of the lane line intersection by using the lane line intersection detection solution, detection accuracy of the lane line intersection depends on accuracy of the lane line detection model, which limits the detection accuracy.

Meanwhile, because there are a relatively small number of pixels at the lane line too close or too far away in the image acquired in real time during vehicle driving, accuracy of a lane line detected by using the lane line detection model is not high enough or unstable. Consequently, the accuracy of the lane line intersection determined by means of geometric logic judgment is even lower, which seriously affects effectiveness of lane line intersection detection.

To resolve the foregoing problem, the embodiments of the present disclosure provide a method for detecting a lane line intersection. The method may be applied to an environment perception scenario of a vehicle in an intelligent driving state, or any other implementable scenario.

In the method for detecting a lane line intersection, a to-be-detected image acquired by an ego vehicle during driving is processed by using a lane line intersection prediction model to obtain a lane line intersection category feature map, and then, coordinates and a category of a lane line intersection in the to-be-detected image are determined based on the lane line intersection category feature map. Because detection of the lane line intersection in the to-be-detected image is implemented based on the lane line intersection prediction model, detection accuracy of the detection of the lane line intersection depends on accuracy of the lane line intersection prediction model and is not limited by accuracy of a lane line detection model. In addition, the manner of detecting the lane line intersection by using the lane line intersection prediction model is not affected by a number of pixels of the lane line intersection that are too far away or too close in the to-be-detected image, and therefore, can improve effectiveness of the detection of the lane line intersection.

Exemplary Method

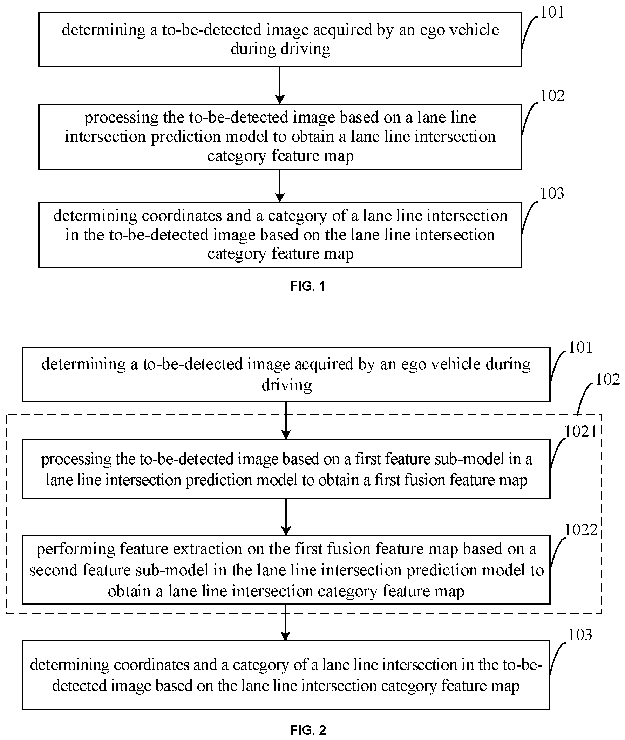

FIG. 1 is a schematic flowchart illustrating a method for detecting a lane line intersection according to an exemplary embodiment of the present disclosure. This embodiment may be applied to an electronic device (for example, a system on chip (SOC)). As shown in FIG. 1, the method includes the following step 101 to step 103.

Step 101: Determining a to-be-detected image acquired by an ego vehicle during driving.

Exemplarily, the to-be-detected image may be an image obtained after a RAW image output from an image acquisition device (for example, an in-vehicle camera) is processed by image process software. In some examples, the to-be-detected image may be a red (R), green (G), blue (B) image, or a YUV image after color space conversion of an RGB image. A data format of the to-be-detected image is not limited in this embodiment of the present disclosure. In this embodiment of the present disclosure, illustrative description is provided by using an example in which the to-be-detected image is an RGB image.

Exemplarily, the to-be-detected image may be an RGB image with a size of W*H and a channel number of 3, including three color channels of R, G, and B.

It may be understood that, because the ego vehicle during driving needs to diverge, converge, or travel along a fixed lane depending on a road condition, the to-be-detected image may include at least one lane line intersection, or may include no lane line intersection. It is not limited in this embodiment of the present disclosure whether the to-be-detected image includes a lane line intersection. However, to clearly describe a specific implementation of the method for detecting a lane line intersection that is provided in this embodiment of the present disclosure, illustrative description is provided in this embodiment of the present disclosure by using an example in which the to-be-detected image includes at least one lane line intersection.

Exemplarily, step 101 may include of performing image acquisition for a driving environment in real time through a front-facing camera during driving of the ego vehicle to obtain a to-be-detected image, and transmits the to-be-detected image to an in-vehicle SOC.

In some examples, the front-facing camera may include at least one of a left front-view camera, a right front-view camera, and a front front-view camera. In this embodiment of the present disclosure, illustrative description is provided by using an example in which the front-facing camera includes a front front-view camera.

Step 102: Processing the to-be-detected image based on a lane line intersection prediction model to obtain a lane line intersection category feature map.

Exemplarily, the lane line intersection category feature map is used for indicating a probability or confidence that each pixel position in the to-be-detected image may be a lane line intersection of a preset category, where there are a plurality of pixel positions, corresponding to the lane line intersection, in the to-be-detected image. In some examples, each feature point in the lane line intersection category feature map may represent a position on the ground, and a value of each feature point may represent a probability or confidence that the position may be a lane line intersection of a preset category. In some examples, if the lane line intersection category feature map is a normalized feature map, a feature value of each feature point in the lane line intersection category feature map is in a range of 0 to 1, that is, greater than or equal to 0 and less than or equal to 1.

Exemplarily, that the to-be-detected image has a size of W*H and a channel number of 3 is used as an example, the lane line intersection category feature map may be a feature map having three channels with a size of W/4*H/4, where the three channels respectively correspond to different lane line intersection categories. In some examples, because the three channels in the lane line intersection category feature map correspond to different lane line intersection categories, the three channels in the lane line intersection category feature map may be referred to as category channels, for example, a first category channel, a second category channel, and a third category channel.

Exemplarily, categories of lane line intersections may include background categories, divergence points, and convergence points. The background category is used for indicating that a ground position corresponding to a pixel position does not belong to a lane line intersection. The divergence point, as a divergence intersection, is used for indicating that a ground position corresponding to a pixel position belongs to a lane intersection. The convergence point, as a convergence intersection, is used for indicating that a ground position corresponding to a pixel position belongs to a lane intersection. The lane intersection corresponds to the lane line intersection in the to-be-detected image.

Exemplarily, the divergence intersection may represent a position at which vehicles in a same driving direction and a same traffic flow diverge to different directions, that is, a position point at which vehicles originally traveling in a same direction disperse to other directions. In some examples, the divergence intersection may be an intersection between a normal driving lane and a divergence lane. The divergence lane may be an auxiliary lane, set up at an entrance of a level crossing or an exit of an elevated road ramp, for completing a vehicle divergence behavior.

Exemplarily, the convergence intersection may represent a position at which vehicles traveling in different directions converge, at a relatively small angle, to a same direction, that is, a position point at which vehicles originally traveling in different directions converge to one direction.

In some examples, the first category channel may correspond to the background category, and the lane line intersection category feature map of the first category channel may be used for indicating probabilities that pixel positions in the to-be-detected image may be a lane line intersection of the background category. The second category channel may correspond to the divergence point, and the lane line intersection category feature map of the second category channel may be used for indicating probabilities that pixel positions in the to-be-detected image may be a lane line intersection of the divergence point. The third category channel may correspond to the convergence point, and the lane line intersection category feature map of the third category channel may be used for indicating probabilities that pixel positions in the to-be-detected image may be a lane line intersection of the convergence point.

Exemplarily, the lane line intersection prediction model may be a trained neural network model for predicting a position and a category of a lane line intersection, and may include a plurality of feature sub-models. In some examples, the plurality of feature sub-models may be used for performing feature extraction and feature fusion on an input to-be-detected image, to obtain a lane line intersection category feature map with fully fused features and high resolution.

Exemplarily, step 102 may include receiving the to-be-detected image and inputting the to-be-detected image to a trained lane line intersection detection model by the in-vehicle SOC, and performing, by the trained lane line intersection detection model, feature extraction and feature fusion on the to-be-detected image to output a lane line intersection category feature map.

Step 103: Determining coordinates and a category of a lane line intersection in the to-be-detected image based on the lane line intersection category feature map.

Exemplarily, the coordinates of the lane line intersection may be coordinates of the lane line intersection in an image pixel coordinate system.

Exemplarily, the lane line intersection detection model may further include a post-processing module. Step 103 may include: performing feature point screening process and coordinate mapping processing on the lane line intersection category feature map by the post-processing module in the lane line intersection detection model to obtain coordinates and a category of a lane line intersection in the to-be-detected image.

According to the method for detecting a lane line intersection provided in this embodiment of the present disclosure, detection accuracy of the detection of the lane line intersection relies on accuracy of the lane line intersection prediction model and is not limited by accuracy of a lane line detection model, because detection of a lane line intersection in a to-be-detected image is implemented based on a lane line intersection prediction model. In addition, the manner of detecting the lane line intersection by using the lane line intersection prediction model is not affected by a number of lane line pixels too far away or too close in the to-be-detected image, and therefore, can improve effectiveness of the detection of the lane line intersection.

In some embodiments of the present disclosure, after the determining of coordinates of a lane line intersection in the to-be-detected image, the following step is further included: performing coordinate transformation on the coordinates of the lane line intersection in the to-be-detected image to obtain coordinates of the lane line intersection in an ego-vehicle coordinate system. In this way, a driving path of the vehicle may be directly planned based on the coordinates of the lane line intersection in the ego-vehicle coordinate system, thus helping improve execution efficiency of a downstream task. In some examples, the coordinates of the lane line intersection in the image pixel coordinate system may be mapped to the ego-vehicle coordinate system based on internal and external parameters of the image acquisition device (such as a camera) to obtain the coordinates of the lane line intersection in the ego-vehicle coordinate system.

In some embodiments of the present disclosure, the lane line intersection prediction model may include a first feature sub-model and a second feature sub-model.

As shown in FIG. 2, based on the foregoing embodiment shown in FIG. 1, step 102 may include the following step 1021 and step 1022.

Step 1021: Processing the to-be-detected image based on a first feature sub-model in the lane line intersection prediction model to obtain a first fusion feature map.

Exemplarily, the first feature sub-model may be a trained feature pyramid model, for performing effective feature extraction and full feature fusion. In some examples, the first feature sub-model may include a plurality of feature extraction layers and a first feature fusion layer.

Exemplarily, the first fusion feature map may be a feature map with a large number of channels and high resolution obtained after the effective feature extraction and full feature fusion are performed on the to-be-detected image. The channel number of the first fusion feature map may be a preset number of channels and may be represented by C. In some examples, C may be any positive integer greater than 128. The specific magnitude of C is not limited in this embodiment of the present disclosure.

In this embodiment of the present disclosure, step 1021 may include: performing feature extraction on the to-be-detected image based on a multi-scale feature extraction layer in the first feature sub-model to obtain a multi-scale feature map; and performing feature fusion on the multi-scale feature map based on a first feature fusion layer in the first feature sub-model to obtain a first fusion feature map.

Exemplarily, the multi-scale feature map may include a plurality of feature maps with gradually decreasing a size and gradually increasing numbers of channels. In some examples, the multi-scale feature map may include three feature maps from a first feature map to a third feature map which have different a size and different numbers of channels. For example, the multi-scale feature map may include a first feature map having a size of W/4*H/4 and a channel number of 32, a second feature map having a size of W/8*H/8 and a channel number of 64, and a third feature map having a size of W/16*H/16 and a channel number of 128.

Exemplarily, a network structure corresponding to the multi-scale feature extraction layer may be a variable group convolutional neural network (VarGNet) with relatively high computational efficiency. The multi-scale feature extraction layer may include a first scale feature extraction layer to a third scale feature extraction layer connected in sequence. In some examples, the first scale feature extraction layer to the third scale feature extraction layer may be a first convolution layer to a third convolution layer having sequentially decreasing output feature a size and sequentially increasing output channel numbers.

In some examples, for example, the to-be-detected image has a size of W*H and a channel number of 3. In this case, the output feature a size of the first scale feature extraction layer to the third scale feature extraction layer may be W/4*H/4, W/8*H/8, and W/16*H/16, respectively, and the corresponding output channel numbers thereof may be 32, 64, and 128, respectively.

Exemplarily, the to-be-detected image has a size of W*H and a channel number of 3, output feature dimensions of the first scale feature extraction layer to the third scale feature extraction layer are W/4*H/4, W/8*H/8, and W/16*H/16, respectively, and the corresponding output channel numbers are 32, 64, and 128, respectively. The performing feature extraction on the to-be-detected image based on a multi-scale feature extraction layer in the first feature sub-model to obtain a multi-scale feature map may include: performing feature extraction on the to-be-detected image with a size of W*H and a channel number of 3 by using the first scale feature extraction layer, and inputting an obtained first feature map with a size of W/4*H/4 and a channel number of 32 to the second scale feature extraction layer; performing feature extraction on the first feature map with the size of W/4*H/4 and the channel number of 32 by using the second scale feature extraction layer, and inputting a second feature map with a size of W/8*H/8 and a channel number of 64 to the third scale feature extraction layer; and performing feature extraction on the second feature map with the size of W/8*H/8 and the channel number of 64 by using the third scale feature extraction layer, and inputting a third feature map with a size of W/16*H/16 and a channel number of 128 to the second feature sub-model.

Exemplarily, the first feature fusion layer may include a first scale fusion layer to a third scale fusion layer that respectively correspond to the third scale feature extraction layer to the first scale feature extraction layer, and the first scale fusion layer to the third scale fusion layer are connected in sequence. In some examples, the first scale fusion layer to the third scale fusion layer may be a fourth convolution layer to a sixth convolution layer that have sequentially increasing output feature size and output channel numbers aligned to the preset number C of channels.

In some examples, for example, the output feature size of the first scale feature extraction layer to the third scale feature extraction layer are W/4*H/4, W/8*H/8, and W/16*H/16, respectively, and the corresponding output channel numbers thereof are 32, 64, and 128, respectively. The output feature size of the first scale fusion layer to the third scale fusion layer may be W/16*H/16, W/8*H/8, and W/4*H/4, respectively, and the corresponding output channel numbers thereof are all C.

Exemplarily, the performing feature extraction on the to-be-detected image based on a multi-scale feature extraction layer in the first feature sub-model to obtain a multi-scale feature map may further include: inputting the third feature map with the size of W/16*H/16 and the channel number of 128 to the first scale fusion layer, inputting the second feature map with the size of W/8*H/8 and the channel number of 64 to the second scale fusion layer, and inputting the first feature map with the size of W/4*H/4 and the channel number of 32 to the third scale fusion layer.

Exemplarily, the performing feature fusion on the multi-scale feature map based on a first feature fusion layer in the first feature sub-model to obtain a first fusion feature map may include the following steps:

Firstly, the first scale fusion layer performs two-fold upsampling and channel number alignment on the third feature map with the size of W/16*H/16 and the channel number of 128 to obtain a third feature map with a size of W/8*H/8 and a channel number of C, and the obtained third feature map with the size of W/8*H/8 and the channel number of C is input to the second scale fusion layer.

Next, the second scale fusion layer receives and performs channel number alignment on the second feature map with the size of W/8*H/8 and the channel number of 64 to obtain a second feature map with a size of W/8*H/8 and a channel number of C; and features corresponding to the second feature map with the size of W/8*H/8 and the channel number of C and the third feature map with the size of W/8*H/8 and the channel number of C are added to obtain a fusion feature submap with a size of W/8*H/8 and a channel number of C.

Next, the second scale fusion layer performs two-fold upsampling and channel number alignment on the fusion feature submap with the size of W/8*H/8 and the channel number of C to obtain a fusion feature submap with a size of W/4*H/4 and a channel number of C, and the fusion feature submap with the size of W/4*H/4 and the channel number of C is input to the third scale fusion layer.

Finally, the third scale fusion layer receives and performs channel number alignment on the first feature map with the size of W/4*H/4 and the channel number of 32 to obtain a first feature map with a size of W/4*H/4 and a channel number of C; and features corresponding to the first feature map with the size of W/4*H/4 and the channel number of C and the fusion feature submap with the size of W/4*H/4 and the channel number of C are added to obtain a first fusion feature map with a size of W/4*H/4 and a channel number of C.

In some examples, that the first scale fusion layer performs two-fold upsampling and channel number alignment on the third feature map with the size of W/16*H/16 and the channel number of 128 to obtain a third feature map with a size of W/8*H/8 and a channel number of C may include the following: the first scale fusion layer first performs two-fold upsampling on the third feature map with the size of W/16*H/16 and the channel number of 128 to obtain a third feature map with a size of W/8*H/8 and a channel number of 128; and then performs channel number alignment on the third feature map with the size of W/8*H/8 and the channel number of 128 to obtain a third feature map with a size of W/8*H/8 and a channel number of C.

In some examples, the implementation in which the second scale fusion layer receives and performs channel number alignment on the second feature map with the size of W/8*H/8 and the channel number of 64 to obtain a second feature map with a size of W/8*H/8 and a channel number of C, and the implementation in which the third scale fusion layer receives performs channel number alignment on the first feature map with the size of W/4*H/4 and the channel number of 32 to obtain a first feature map with a size of W/4*H/4 and a channel number of C are both similar to the implementation in which the first scale fusion layer performs two-fold upsampling and channel number alignment on the third feature map with the size of W/16*H/16 and the channel number of 128 to obtain a third feature map with a size of W/8*H/8 and a channel number of C, and details are not described herein again in this embodiment of the present disclosure.

In the method for detecting a lane line intersection provided in this embodiment of the present disclosure, performing feature extraction on a to-be-detected image based on a multi-scale feature extraction layer in a first feature sub-model may effectively implement feature extraction of the to-be-detected image to obtain a multi-scale feature map. Then, feature fusion is performed on the multi-scale feature map based on a first feature fusion layer in the first feature sub-model, so that full feature fusion may be implemented on the multi-scale feature map to obtain a first fusion feature map with a large number of channels and high resolution. In this way, accuracy and robustness of lane line intersection detection may be improved.

Step 1022: Performing feature extraction on the first fusion feature map based on a second feature sub-model in the lane line intersection prediction model to obtain the lane line intersection category feature map.

Exemplarily, the second feature sub-model may be a trained lane line intersection detection sub-model, for further feature fusion and feature preprocessing before prediction of a lane line intersection. In some examples, the second feature sub-model may include a second feature fusion layer and an output layer.

In this embodiment of the present disclosure, step 1022 may include: performing feature fusion on the first fusion feature map based on a second feature fusion layer in the second feature sub-model to obtain a second fusion feature map; and performing probability transformation on the second fusion feature map based on an output layer in the second feature sub-model to obtain the lane line intersection category feature map.

Exemplarily, the second fusion feature map may be a feature map representing different categories of lane line intersections. the second fusion feature map may have a size and a channel number which are the same as the lane line intersection category feature map, and have categories of lane line intersections corresponding to the respective channels are also the same as the lane line intersection category feature map. In some examples, the second fusion feature map may alternatively be a feature map with a size of W/4*H/4 and a channel number of 3, and have the three category channels corresponding to different categories of lane line intersections.

Exemplarily, the second feature fusion layer may include stacked convolutional layers and an activation layer. In an example, the first fusion feature map has a size of W/4*H/4 and a channel number of C. The performing feature fusion on the first fusion feature map based on a second feature fusion layer in the second feature sub-model to obtain a second fusion feature map may include: performing dimension-invariant feature extraction on the first fusion feature map with the size of W/4*H/4 and the channel number of C based on the stacked convolutional layers in the second feature fusion layer to obtain a third fusion feature map with rich features, and then processing the third fusion feature map with rich features by using the activation layer in the second feature fusion layer to obtain a second fusion feature map with a size of W/4*H/4 and a channel number of 3 and having higher complexity and a higher level of expression capability.

Exemplarily, the performing probability transformation on the second fusion feature map based on an output layer in the second feature sub-model to obtain the lane line intersection category feature map may include: effectively transforming each of feature points in the second fusion feature map with the size of W/4*H/4 and the channel number of 3 into a probability distribution corresponding to each category by using a Softmax function of the output layer in the second feature sub-model, to enhance differences among feature values corresponding to the feature points to obtain a dimension-invariant lane line intersection category feature map.

According to the method for detecting a lane line intersection provided in this embodiment of the present disclosure, a first fusion feature map with a large number of channels and high resolution may be obtained by processing a to-be-detected image based on a first feature sub-model in a lane line intersection prediction model. In this way, a high-resolution lane line intersection category feature map may be obtained by performing feature extraction on the first fusion feature map with a large number of channels and high resolution based on a second feature sub-model in the lane line intersection prediction model. Furthermore, a classification probability of each pixel position may be accurately determined based on the high-resolution lane line intersection category feature map, thereby improving detection accuracy of a lane line intersection.

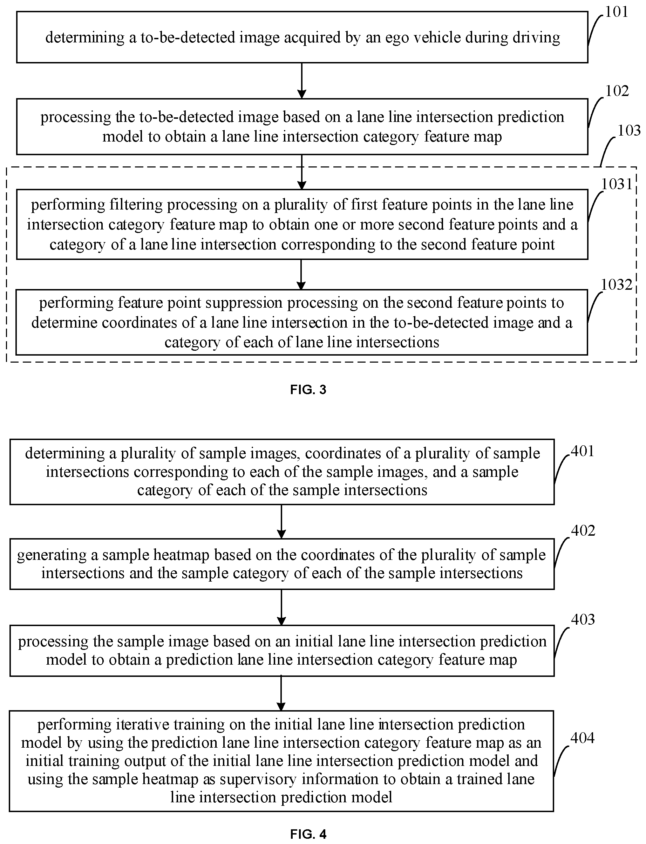

As shown in FIG. 3, based on the foregoing embodiment shown in FIG. 1, step 103 may include the following step 1031 and step 1032.

Step 1031: Performing filtering processing on a plurality of first feature points in the lane line intersection category feature map to obtain one or more second feature points and a category of a lane line intersection corresponding to the second feature point.

Exemplarily, the first feature point may be any position point in the lane line intersection category feature map. Using the lane line intersection category feature map with a size of W/4*H/4 and a channel number of 3 as an example, in some examples, the lane line intersection category feature map may include W/4*H/4 first feature points. In addition, because the lane line intersection category feature map includes three category channels, each of the first feature points may correspond to three feature values respectively in the three category channels. For example, each of the first feature points may correspond to a first feature value in a first category channel, a second feature value in a second category channel, and a third feature value in a third category channel.

In some embodiments of the present disclosure, step 1031 may include: determining a first feature value corresponding to the first feature point in a first category channel, a second feature value corresponding to the first feature point in a second category channel, and a third feature value corresponding to the first feature point in a third category channel in the lane line intersection category feature map; determining, in response to a maximal feature value among the first feature value, the second feature value, and the third feature value corresponding to the first feature point being greater than or equal to a preset threshold, the first feature point as the second feature point; and determining, based on a category channel corresponding to the maximal feature value, the category of the lane line intersection corresponding to the second feature point.

Exemplarily, the preset threshold may be determined based on precision, accuracy, and a recall rate of the lane line intersection prediction model. In some examples, the preset threshold may be any fraction greater than or equal to 0.5 and less than 1. For example, the preset threshold may be 0.5. The specific magnitude of the preset threshold is not limited in this embodiment of the present disclosure. In this embodiment of the present disclosure, illustrative description is provided by using an example in which the preset threshold is 0.5.

Exemplarily, the determining, in response to a maximal feature value among the first feature value, the second feature value, and the third feature value corresponding to the first feature point being greater than or equal to a preset threshold, the first feature point as the second feature point may include: determining a maximal feature value among a first feature value, a second feature value, and a third feature value that correspond to each of the plurality of first feature points, and determining a first feature point, with a maximal feature value greater than or equal to the preset threshold, among the plurality of first feature points as the second feature point.

In some examples, after the determining a maximal feature value among a first feature value, a second feature value, and a third feature value that correspond to each of the plurality of first feature points, the following step may be further included: discarding a first feature point with a maximal feature value less than a preset threshold.

As an example, the preset threshold is 0.5. In some examples, if a first feature value, a second feature value, and a third feature value that correspond to a first feature point are 0.45, 0.5, and 0.8, respectively, a maximal feature value corresponding to the first feature point is 0.8, and because 0.8 is greater than the preset threshold 0.5, the first feature point may be determined as the second feature point. In some other examples, if a first feature value, a second feature value, and a third feature value that correspond to a first feature point are 0.45, 0.48, and 0.3, respectively, a maximal feature value corresponding to the first feature point is 0.48, and because 0.48 is less than the preset threshold 0.5, the first feature point is not the second feature point, and the first feature point is discarded.

It may be understood that, because the preset threshold is determined based on the precision, accuracy, and recall rate of the lane line intersection prediction model, the second feature point corresponding to the lane line intersection may be accurately screened out from the plurality of first feature points based on the preset threshold, and a feature point corresponding to the background category may be excluded.

Exemplarily, after the second feature point is determined, the following step may be further included: determining coordinates corresponding to the second feature point. In some examples, if the lane line intersection category feature map has a size of W/4*H/4 and a channel number of 3, a lateral coordinate corresponding to the second feature point may be less than or equal to W/4, and a longitudinal coordinate corresponding to the second feature point may be less than or equal to H/4.

Exemplarily, the determining, based on a category channel corresponding to the maximal feature value, the category of the lane line intersection corresponding to the second feature point may include: determining a category channel where the maximal feature value corresponding to each of the second feature points is located, and determining a category of a lane line intersection corresponding to the category channel where the maximal feature value is located as a category of a lane line intersection corresponding to the second feature point.

It is taken as an example that a category corresponding to the first category channel is a background category, a category corresponding to the second category channel is a divergence point, and a category corresponding to the third category channel is a convergence point. In some examples, if a first feature value, a second feature value, and a third feature value that corresponding to a certain second feature point are 0.45, 0.5, and 0.8, respectively, the maximal feature value is 0.8, and a convergence point corresponding to the third category channel where 0.8 is located may be determined as a category of a lane line intersection corresponding to the second feature point.

It may be understood that, because a larger feature value corresponding to the second feature point in the category channel indicates a higher probability that a pixel corresponding to the feature point is of a category corresponding to the category channel, the category of the lane line intersection corresponding to the second feature point may be accurately prediction based on the category channel corresponding to the maximal feature value.

Exemplarily, after the category of the lane line intersection corresponding to the second feature point is determined, the following step is further included: storing the coordinates, the maximal feature value, and the category of the lane line intersection that correspond to the second feature point. In this way, at least one vector with a dimension of 4 may be obtained, and if a number of the second feature points is M, the vector may be denoted as M*4.

Step 1032: Performing feature point suppression processing on the second feature points to determine the coordinates of the lane line intersection in the to-be-detected image and the category of the lane line intersection.

Exemplarily, step 1032 may include: cyclically traversing all of a plurality of second feature points, calculating a distance between coordinates of any two of the second feature points, and determining two second feature points, the distance between which is less than a preset distance threshold, as two second feature points with overlap, and retaining a second feature point with a larger maximal feature value between the two second feature points. In this way, a feature point duplication may be removed to obtain a finally retained second feature point, coordinates of the finally retained second feature point are determined as the coordinates of the lane line intersection in the to-be-detected image, and a category of the retained second feature point is determined as the category of the lane line intersection.

In some examples, the preset threshold may be a preset fixed distance value. Magnitude of the preset threshold is not limited in this embodiment of the present disclosure. In this embodiment of the present disclosure, illustrative description is provided by using an example in which the preset threshold is a distance value corresponding to 40 pixels.

In some examples, the calculating a distance between any two of the second feature points may include: calculating a distance between a second feature point whose coordinates are (X1, Y1) and a second feature point whose coordinates are (X2, Y2) according to the following formula (1).

$$\text{Distance} = ((X1 - X2)^2 + (Y1 - Y2)^2)^{1/2} \qquad (1)$$

In the method for detecting a lane line intersection provided in this embodiment of the present disclosure, through performing filtering processing on a plurality of first feature points in the lane line intersection category feature map, a first feature point corresponding to the background category may be filtered out to obtain one or more second feature points corresponding to a lane line intersection and a category of the lane line intersection corresponding to the second feature point. Then, feature point duplication for the second feature points are removed by performing feature point suppression processing on a plurality of second feature points, thereby improving prediction accuracy, so that accurate coordinates of the lane line intersection and an accurate category of each lane line intersection may be obtained.

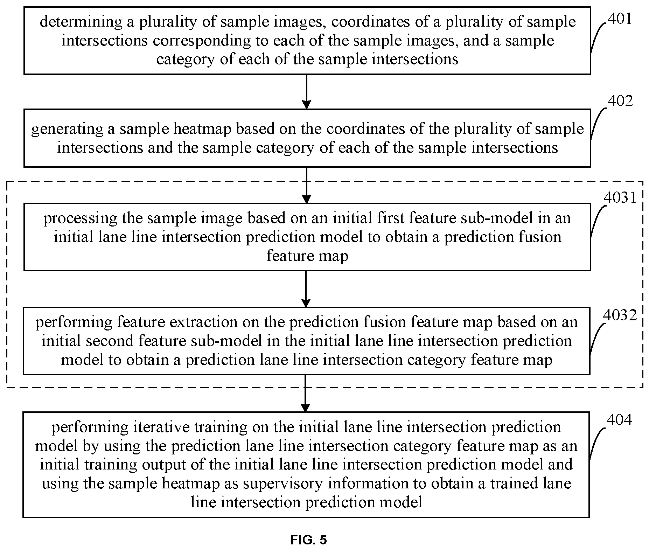

To improve prediction accuracy of a lane line intersection prediction model, an initial lane line intersection prediction model may be pre-trained to obtain the lane line intersection prediction model used in the abovementioned embodiment. An embodiment of the present disclosure further provides a method for training a lane line intersection prediction model. As shown in FIG. 5, the method includes the following step 401 to step 404.

Step 401: Determining a plurality of sample images, coordinates of a plurality of sample intersections corresponding to each of the sample images, and a sample category of each of the sample intersections.

Exemplarily, the sample images may be a plurality of RGB images acquired by a plurality of vehicles during traveling. The sample image may include at least one lane line intersection, or may include no lane line intersection. Whether the sample image includes a lane line intersection is not limited in this embodiment of the present disclosure.

Exemplarily, each of the sample images may correspond to coordinates of a plurality of sample intersections, and all of the plurality of sample intersections may correspond to a same sample category. In some examples, the coordinates of the plurality of sample intersections are coordinates of a plurality of sample intersections in a Gaussian distribution. In this embodiment of the present disclosure, the coordinates of the plurality of sample intersections and the sample category of each of the sample intersections may be used as truth values for the lane line intersection prediction model, that is, label information of the lane line intersection prediction model.

In some examples, sample images, coordinates of a plurality of sample intersections corresponding to each of the sample images, and a sample category of each of the sample intersections may be predetermined before training of the lane line intersection prediction model.

Exemplarily, when predetermining the sample images and the coordinates of the plurality of sample intersections corresponding to each of the sample images, an average value and a standard deviation of coordinates of corresponding sample intersections in a Gaussian distribution may be determined first, and then coordinates of a plurality of sample intersections in the Gaussian distribution that correspond to each of the sample images are generated based on the average value and the standard deviation of the coordinates of the sample intersections in the Gaussian distribution.

Step 402: Generating a sample heatmap based on the coordinates of the plurality of sample intersections and the sample category of each of the sample intersections.

Exemplarily, the sample heatmap and the lane line intersection category feature map may have the same dimensions but different numbers of channels. In some examples, a channel number of the sample heatmap may be less than a channel number of the lane line intersection category feature map. For example, the sample heatmap and the lane line intersection category feature map may both have dimensions of W/4*H/4, but the channel number of the sample heatmap is 2, while the channel number of the lane line intersection category feature map is 3.

In some examples, for example, the channel number of the sample heatmap is 2, and in this case, the sample heatmap may include a first sample category channel corresponding to a divergence point and a second sample category channel corresponding to a convergence point.

Exemplarily, step 402 may include: performing encoding processing on the coordinates of the plurality of sample intersections and the sample category of each of the sample intersections to obtain the sample heatmap.

In some examples, coordinates of a plurality of sequence sample intersections and the sample category of each of the sample intersections may be mapped through a geometric mapping function to obtain the sample heatmap.

Step 403: Processing the sample image based on an initial lane line intersection prediction model to obtain a prediction lane line intersection category feature map.

Exemplarily, an implementation of step 403 is similar to the implementation of step 102 in the embodiment shown in FIG. 1, and the details are not described herein again in this embodiment of the present disclosure.

Step 404: Performing iterative training on the initial lane line intersection prediction model by using the prediction lane line intersection category feature map as an initial training output of the initial lane line intersection prediction model and using the sample heatmap as supervisory information to obtain a trained lane line intersection prediction model.

Exemplarily, step 404 may include: determining a loss value based on the lane line intersection category feature map and the sample heatmap, then continuously updating a network parameter in the initial lane line intersection prediction model by using the loss value, until an updated model satisfies a convergence condition, and determining the model that satisfies the convergence condition as the trained lane line intersection prediction model.

Exemplarily, the convergence condition may include at least one of the followings: a loss value output from the model being less than a first preset value, a change in weights between adjacent two iterations being less than a second preset value, and a number of iterations reaching a preset number. In some examples, the first preset value and the second preset value both may be determined based on accuracy of the model. Magnitude of each of the first preset value and the second preset value is not limited in this embodiment of the present disclosure.

In the method for training a lane line intersection prediction model provided in this embodiment of the present disclosure, a sample heatmap is generated by using coordinates of a plurality of sample intersections corresponding to each of sample images and a sample category of each of the sample intersections, and the sample image is processed based on an initial lane line intersection prediction model to obtain a prediction lane line intersection category feature map. Then, iterative training is performed on the lane line intersection prediction model by using the prediction lane line intersection category feature map as an initial training output of the initial lane line intersection prediction model and using the sample heatmap as supervisory information to obtain a trained lane line intersection prediction model. This enables the trained lane line intersection prediction model to have a function of accurately determining a lane line intersection and a category of the lane line intersection. In addition, because each of the sample images corresponds to a plurality of sample intersections, efficiency of model training may be improved.

As shown in FIG. 5, based on the foregoing embodiment shown in FIG. 4, step 403 may include the following step 4031 and step 4032.

Step 4031: Processing the sample image based on an initial first feature sub-model in the initial lane line intersection prediction model to obtain a prediction fusion feature map.

In some embodiments of the present disclosure, step 4031 may include: performing feature extraction on the sample image based on a multi-scale feature extraction layer in the initial first feature sub-model to obtain a prediction multi-scale feature map; and performing feature fusion on the prediction multi-scale feature map based on a first feature fusion layer in the initial first feature sub-model to obtain a first prediction fusion feature map.

Step 4032: Performing feature extraction on the prediction fusion feature map based on an initial second feature sub-model in the initial lane line intersection prediction model to obtain the prediction lane line intersection category feature map.

In some embodiments of the present disclosure, step 403z may include: performing feature fusion on the first prediction fusion feature map based on a second feature fusion layer in the initial second feature fusion sub-model to obtain a second prediction fusion feature map; and performing probability transformation on the second prediction fusion feature map based on an output layer in the initial second feature sub-model to obtain the prediction lane line intersection category feature map.

In the method for training a lane line intersection prediction model provided in this embodiment of the present disclosure, a sample image is processed by using an initial first feature sub-model and a second feature fusion sub-model in sequence to obtain a prediction lane line intersection feature map in an initial lane line intersection prediction model, a trained lane line intersection prediction model obtained by training the initial lane line intersection prediction model based on the prediction lane line intersection feature map has relatively strong robustness.

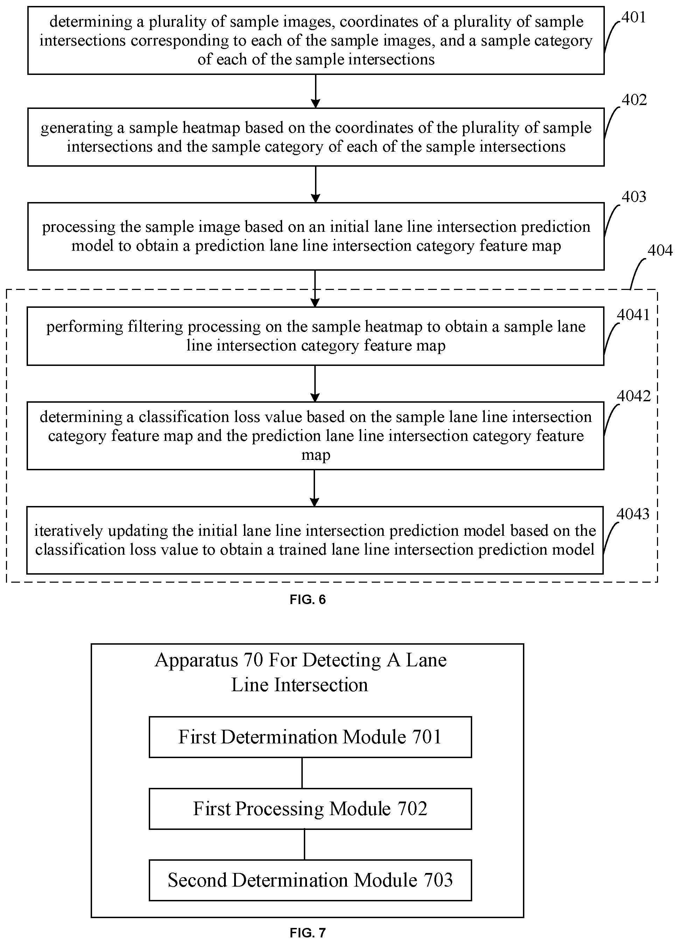

As shown in FIG. 6, based on the foregoing embodiment shown in FIG. 4, step 404 may include the following step 4041 to step 4043.

Step 4041: Performing filtering processing on the sample heatmap to obtain a sample lane line intersection category feature map.

Exemplarily, the sample lane line intersection category feature map and the sample heatmap may have the same dimensions but different numbers of channels. In some examples, the sample lane line intersection category feature map and the sample heatmap may both have dimensions of W/4*H/4, but the channel number of the sample heatmap is 2, while the channel number of the sample lane line intersection category feature map is 1.

Exemplarily, different lane line intersection category feature map may correspond to different sample categories. In some examples, a background sample category may be represented by a sample category value of "0", a divergence point may be represented by a sample category value of "1", and a convergence point may be represented by a sample category value of "2".

Exemplarily, step 4041 may include: determining a heat response value for each truth point (position point) in the sample heatmap by using a two-dimensional Gaussian distribution; and determining, based on magnitude of the heat response value for the truth point, a category of a lane line intersection corresponding to each truth point, and forming the sample lane line intersection category feature map based on the category of the lane line intersection corresponding to each truth point.

Exemplarily, the magnitude of the heat response value is used for indicating a proximity degree between the sample truth point and the lane line intersection. In some examples, a larger heat response value indicates a shorter distance to the lane line intersection, and a smaller heat response value indicates a longer distance to the lane line intersection. Herein, the proximity degree between the sample truth point and the lane line intersection may be represented by using the magnitude of the distance.

Exemplarily, if the sample heatmap has a size of H/4*W/4 and a channel number of 2, two heat response values may be correspondingly determined for each truth point in the sample heatmap by using the two-dimensional Gaussian distribution, that is, a first category heat response value corresponding to the first sample category channel and a second category heat response value corresponding to the second sample category channel.

Exemplarily, the determining, based on magnitude of the heat response value for the truth point, a category of a lane line intersection corresponding to each truth point may include: determining a first truth threshold; and in response to two heat response values corresponding to each truth point both being greater than the first truth threshold, determining the truth point as a positive sample truth value, and then determining a category of the truth point based on a sample category channel corresponding to a larger heat value between the two heat response values; or in response to two heat response values corresponding to each truth point both being less than a second truth threshold, determining the truth point as a negative sample and a category of the truth point as a background category.

In this embodiment of the present disclosure, if the two heat response values corresponding to the truth point are greater than or equal to the second truth threshold and less than the first truth threshold, a loss value is not calculated for the truth point.

Exemplarily, the first truth threshold and the second truth threshold both may be determined based on accuracy of the lane line intersection prediction model, and the first truth threshold is greater than the second truth threshold. In some examples, the first truth threshold may be 0.85, and the second truth threshold may be 0.75.

Exemplarily, the determining a category of the truth point based on a sample category channel corresponding to a larger value between the two heat response values may include: determining a category of a lane line intersection, corresponding to a sample category channel where the larger heat response value is located, as the category of the truth point.

In some examples, for example, the divergence point corresponds to the first sample category channel in the sample heatmap, and the convergence point corresponds to the second sample category channel in the sample heatmap. If two heat response values of a certain truth point are respectively 0.95 corresponding to the first sample category channel and 0.86 corresponding to the second sample category channel, a divergence point corresponding to the first sample category channel where 0.95 is located may be used as the category of the truth point.

Step 4042: Determining a classification loss value based on the sample lane line intersection category feature map and the prediction lane line intersection category feature map.

Exemplarily, step 4042 may include: calculating a classification loss value between each position point (feature point) in the prediction lane line intersection category feature map and a corresponding position point (truth point) in the sample lane line intersection category feature map.

Step 4043: Iteratively updating the initial lane line intersection prediction model based on the classification loss value to obtain the trained lane line intersection prediction model.

Exemplarily, step 4043 may include: determining a weight corresponding to each position point, and determining a product of the weight for the position point and a classification loss value for the position point as an effective loss value for the corresponding position point. Finally, an average value of the effective loss values corresponding to all the position points may be determined as a model loss value, and a network parameter in the initial lane line intersection prediction model is updated by using the model loss value, until an updated model satisfies a convergence condition. If the updated model satisfies the convergence condition, the trained lane line intersection prediction model is obtained.

In some examples, the weight corresponding to each position point may be a larger value between the heat response values in the sample heatmap.

In the method for training a lane line intersection prediction model provided in this embodiment of the present disclosure, training a model by using a classification loss value for each position point in a sample lane line intersection category feature map and a prediction lane line intersection category feature map may improve a training effect for an initial lane line intersection prediction model, thereby improving accuracy of a trained lane line intersection prediction model.

Exemplary Apparatus

FIG. 7 is a schematic diagram illustrating a composition structure of an apparatus for detecting a lane line intersection according to an exemplary embodiment of the present disclosure. As shown in FIG. 7, the apparatus 70 for detecting a lane line intersection may include a first determination module 701, a first processing module 702, and a second determination module 703.

The first determination module 701 is configured for determining a to-be-detected image acquired by an ego vehicle during driving.

The first processing module 702 is configured for processing the to-be-detected image based on a lane line intersection prediction model to obtain a lane line intersection category feature map.

The second determination module 703 is configured for determining coordinates and a category of a lane line intersection in the to-be-detected image based on the lane line intersection category feature map.

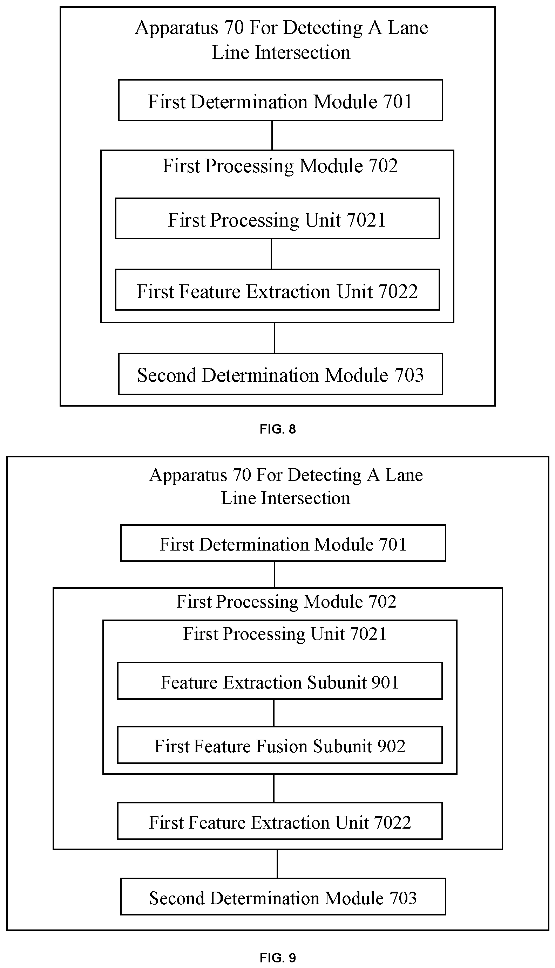

In some embodiments, as shown in FIG. 8, based on the foregoing embodiment shown in FIG. 7, the first processing module 702 may include a first processing unit 7021 and a first feature extraction unit 7022.

The first processing unit 7021 is configured for processing the to-be-detected image based on a first feature sub-model in the lane line intersection prediction model to obtain a first fusion feature map.

The first feature extraction unit 7022 is configured for performing feature extraction on the first fusion feature map based on a second feature sub-model in the lane line intersection prediction model to obtain the lane line intersection category feature map.

In some embodiments, as shown in FIG. 9, based on the foregoing embodiment shown in FIG. 8, the first processing unit 7021 may include a feature extraction subunit 901 and a first feature fusion subunit 902.

The feature extraction subunit 901 is configured for performing feature extraction on the to-be-detected image based on a multi-scale feature extraction layer in the first feature sub-model to obtain a multi-scale feature map.

The first feature fusion subunit 902 is configured for performing feature fusion on the multi-scale feature map based on a first feature fusion layer in the first feature sub-model to obtain the first fusion feature map.

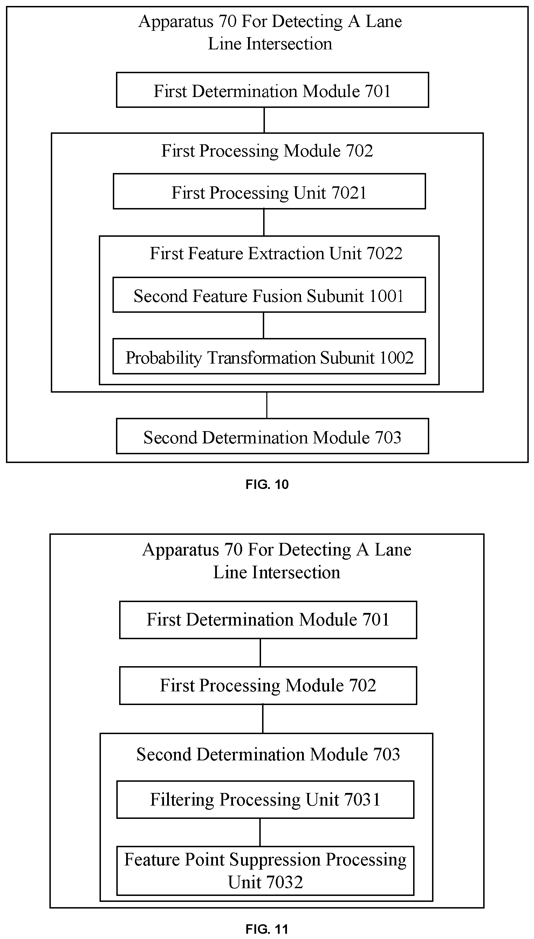

In some embodiments, as shown in FIG. 10, based on the foregoing embodiment shown in FIG. 8, the first feature extraction unit 7022 may include a second feature fusion subunit 1001 and a probability transformation subunit 1002.

The second feature fusion subunit 1001 is configured for performing feature fusion on the first fusion feature map based on a second feature fusion layer in the second feature sub-model to obtain a second fusion feature map.

The probability transformation subunit 1002 is configured for performing probability transformation on the second fusion feature map based on an output layer in the second feature sub-model to obtain the lane line intersection category feature map.

In some embodiments, as shown in FIG. 11, based on the foregoing embodiment shown in FIG. 7, the second determination module 703 may include a filtering processing unit 7031 and a feature point suppression processing unit 7032.

The filtering processing unit 7031 is configured for performing filtering processing on a plurality of first feature points in the lane line intersection category feature map to obtain one or more second feature points and a category of a lane line intersection corresponding to the second feature point.

The feature point suppression processing unit 7032 is configured for performing feature point suppression processing on the second feature points to determine the coordinates of the lane line intersection in the to-be-detected image and the category of the lane line intersection.

Regarding the apparatus for detecting a lane line intersection in the foregoing embodiment, the specific manner in which each module thereof performs the operations and the corresponding beneficial effects have been described in detail in the corresponding embodiment section of the part of the method for detecting a lane line intersection described above, reference may be made to the corresponding operation execution manner and beneficial technical effects of the foregoing "Exemplary Method" section, and the details are not described herein again.

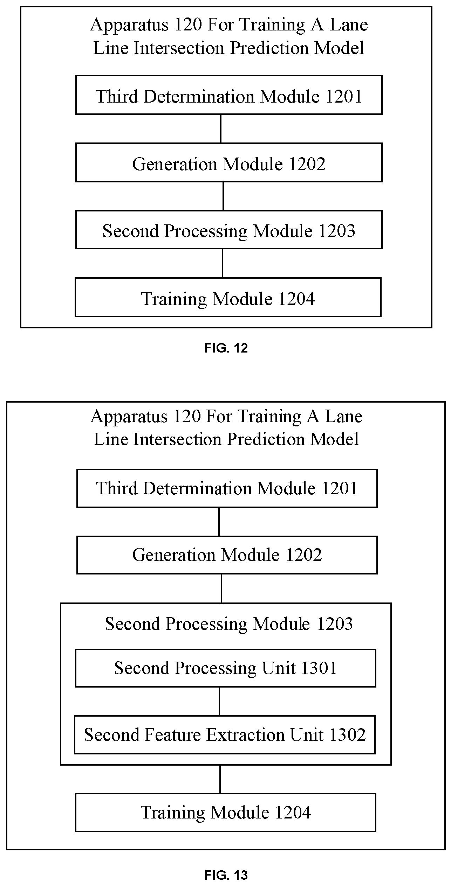

FIG. 12 is a schematic diagram illustrating a composition structure of an apparatus for training a lane line intersection prediction model according to an exemplary embodiment of the present disclosure. As shown in FIG. 12, the apparatus 120 for training a lane line intersection prediction model may include a third determination module 1201, a generation module 1202, a second processing module 1203, and a training module 1204.

The third determination module 1201 is configured for determining a plurality of sample images, coordinates of a plurality of sample intersections corresponding to each of the sample images, and a sample category of each of the sample intersections.

The generation module 1202 is configured for generating a sample heatmap based on the coordinates of the plurality of sample intersections and the sample category of each of the sample intersections.

The second processing module 1203 is configured for processing the sample image based on an initial lane line intersection prediction model to obtain a prediction lane line intersection category feature map.

The training module 1204 is configured for performing iterative training on the initial lane line intersection prediction model by using the prediction lane line intersection category feature map as an initial training output of the initial lane line intersection prediction model and using the sample heatmap as supervisory information to obtain a trained lane line intersection prediction model.

In some embodiments, as shown in FIG. 13, based on the foregoing embodiment shown in FIG. 12, the second processing module 1203 may include a second processing unit 1301 and a second feature extraction unit 1302.

The second processing unit 1301 is configured for processing the sample image based on an initial first feature sub-model in the initial lane line intersection prediction model to obtain a prediction fusion feature map.

The second feature extraction unit 1302 is configured for performing feature extraction on the prediction fusion feature map based on an initial second feature sub-model in the initial lane line intersection prediction model to obtain the prediction lane line intersection category feature map.

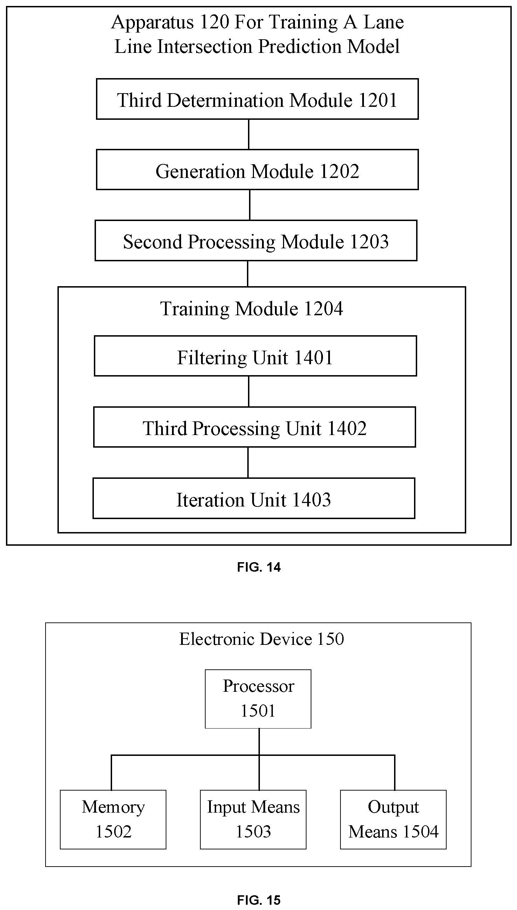

In some embodiments, as shown in FIG. 14, based on the foregoing embodiment shown in FIG. 12, the training module 1204 may include a filtering unit 1401, a third processing unit 1402, and an iteration unit 1403.

The filtering unit 1401 is configured for performing filtering processing on the sample heatmap to obtain a sample lane line intersection category feature map.

The third processing unit 1402 is configured for determining a classification loss value based on the sample lane line intersection category feature map and the prediction lane line intersection category feature map.

The iteration unit 1403 is configured for iteratively updating the initial lane line intersection prediction model based on the classification loss value to obtain the trained lane line intersection prediction model.

Regarding the apparatus for training a lane line intersection prediction model in the foregoing embodiment, the specific manner in which each module thereof performs the operations and the corresponding beneficial effects have been described in detail in the corresponding embodiment section of the part of the method for training a lane line intersection prediction model described above, reference may be made to the corresponding operation execution manner and beneficial technical effects of the foregoing "Exemplary Method" section, and the details are not described herein again.

Exemplary Electronic Device

FIG. 15 is a schematic diagram illustrating a composition structure of an electronic device according to an exemplary embodiment of the present disclosure. As shown in FIG. 15, the electronic device 150 includes one or more processors 1501 and a memory 1502.

The processor 1501 may be a central processing unit (CPU) or another form of processing unit having a data processing capability and/or an instruction execution capability, and may control another component in the electronic device 150 to perform a desired function.

The memory 1502 may include one or more computer program products. The computer program product may include various forms of computer readable storage mediums, such as a volatile memory and/or a non-volatile memory. The volatile memory may include, for example, a random access memory (RAM) and/or a cache. The non-volatile memory may include, for example, a read-only memory (ROM), a hard disk, or a flash memory. The computer readable storage medium may store one or more computer program instructions. The processor 1501 may run the computer program instructions to implement the method for detecting a lane line intersection or the method for training a lane line intersection prediction model in the foregoing embodiments of this application.

In an example, the electronic device 150 may further include an input means 1503 and an output means 1504. The components are interconnected through a bus system and/or other forms of connection mechanisms (not shown).

Certainly, for simplicity, only some of components in the electronic device 150 that are related to this application are shown in FIG. 15, and components such as a bus and an input/output interface are omitted. Besides, the electronic device 150 may further include any other appropriate components depending on specific applications.

Exemplary Computer Program Product And Computer Readable Storage Medium

In addition to the foregoing method and device, the embodiments of the present disclosure may also provide a computer program product including computer program instructions that, when run by a processor, cause the processor to perform the steps of the method for detecting a lane line intersection or the method for training a lane line intersection prediction model according to the embodiments of the present disclosure that is described in the foregoing "Exemplary Method" section.

The computer program product may be program code, written with one or any combination of a plurality of programming languages, which is configured for performing the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, on which computer program instructions are stored. The computer program instructions, when run by a processor, cause the processor to perform the steps of the method for detecting a lane line intersection or the method for training a lane line intersection prediction model according to the embodiments of the present disclosure that is described above in the "Exemplary Method" section.

The computer readable storage medium may be one readable medium or any combination of a plurality of readable media. The readable medium may be a readable signal medium or a readable storage medium. The readable storage medium includes, for example, but is not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a RAM, a ROM, an EPROM or a flash memory, an optical fiber, a portable compact disk ROM (CD-ROM), an optical storage device, a magnetic storage device, or any suitable combination of the above.

Basic principles of the present disclosure are described above in combination with specific embodiments. However, the advantages, superiorities, effects, and the like mentioned in the present disclosure are merely examples rather than limitations, and it should not be considered that these advantages, superiorities, effects, and the like are necessary for each of the embodiment of the present disclosure. In addition, specific details disclosed above are merely for examples and for ease of understanding, rather than limitations. The details described above do not limit that the present disclosure must be implemented by using the foregoing specific details.

A person skilled in the art may make various modifications and variations to the present disclosure without departing from the spirit and scope of this application. The present disclosure is intended to cover these modifications and variations provided that they fall within the scope of protection defined by the claims of the present disclosure or equivalents thereof.

**Claims**

1. A method for detecting a lane line intersection, **characterized by** comprising:

   determining (101) a to-be-detected image acquired by an ego vehicle during driving;
   processing (102) the to-be-detected image based on a lane line intersection prediction model to obtain a lane line intersection category feature map; and
   determining (103) coordinates and a category of a lane line intersection in the to-be-detected image based on the lane line intersection category feature map.

2. The method according to claim 1, wherein the processing (102) the to-be-detected image based on a lane line intersection prediction model to obtain a lane line intersection category feature map comprises:

   processing (1021) the to-be-detected image based on a first feature sub-model in the lane line intersection prediction model to obtain a first fusion feature map; and
   performing (1022) feature extraction on the first fusion feature map based on a second feature sub-model in the lane line intersection prediction model to obtain the lane line intersection category feature map.

**3.** The method according to claim 2, wherein the processing (1021) the to-be-detected image based on a first feature sub-model in the lane line intersection prediction model to obtain a first fusion feature map comprises:

performing feature extraction on the to-be-detected image based on a multi-scale feature extraction layer in the first feature sub-model to obtain a multi-scale feature map; and performing feature fusion on the multi-scale feature map based on a first feature fusion layer in the first feature sub-model to obtain the first fusion feature map.

**4.** The method according to claim 2, wherein the performing (1022) feature extraction on the first fusion feature map based on a second feature sub-model in the lane line intersection prediction model to obtain the lane line intersection category feature map comprises:

performing feature fusion on the first fusion feature map based on a second feature fusion layer in the second feature sub-model to obtain a second fusion feature map; and performing probability transformation on the second fusion feature map based on an output layer in the second feature sub-model to obtain the lane line intersection category feature map.

**5.** The method according to any one of claims 1 to 4, wherein the determining (103) coordinates and a category of a lane line intersection in the to-be-detected image based on the lane line intersection category feature map comprises:

performing (1031) filtering processing on a plurality of first feature points in the lane line intersection category feature map to obtain one or more second feature points and a category of a lane line intersection corresponding to the second feature point; and performing (1032) feature point suppression processing on the second feature points to determine the coordinates of the lane line intersection in the to-be-detected image and the category of the lane line intersection.

**6.** The method according to claim 5, wherein the performing (1031) filtering processing on a plurality of first feature points in the lane line intersection category feature map to obtain one or more second feature points and a category of a lane line intersection corresponding to the second feature point comprises:

determining a first feature value corresponding to the first feature point in a first category channel, a second feature value corresponding to the first feature point in a second category channel, and a third feature value corresponding to the first feature point in a third category channel in the lane line intersection category feature map; determining, in response to a maximal feature value among the first feature value, the second feature value, and the third feature value corresponding to the first feature point being greater than or equal to a preset threshold, the first feature point as the second feature point; and determining, based on a category channel corresponding to the maximal feature value, the category of the lane line intersection corresponding to the second feature point.

**7.** A method for training a lane line intersection prediction model, **characterized by** comprising:

determining (401) a plurality of sample images, coordinates of a plurality of sample intersections corresponding to each of the sample images, and a sample category of each of the sample intersections; generating (402) a sample heatmap based on the coordinates of the plurality of sample intersections and the sample category of each of the sample intersections; processing (403) the sample image based on an initial lane line intersection prediction model to obtain a prediction lane line intersection category feature map; and performing (404) iterative training on the initial lane line intersection prediction model by using the prediction lane line intersection category feature map as an initial training output of the initial lane line intersection prediction model and using the sample heatmap as supervisory information to obtain a trained lane line intersection prediction model.

**8.** The method according to claim 7, wherein the processing (403) the sample image based on an initial lane line intersection prediction model to obtain a prediction lane line intersection category feature map comprises:

processing (4031) the sample image based on an initial first feature sub-model in the initial lane line intersection prediction model to obtain a prediction fusion feature map; and performing (4032) feature extraction on the prediction fusion feature map based on an initial second feature sub-model in the initial lane line intersection prediction model to obtain the prediction lane line intersection category feature map.

9. The method according to claim 7 or 8, wherein the performing (404) iterative training on the initial lane line intersection prediction model by using the prediction lane line intersection category feature map as an initial training output of the initial lane line intersection prediction model and using the sample heatmap as supervisory information to obtain a trained lane line intersection prediction model comprises:

> performing (4041) filtering processing on the sample heatmap to obtain a sample lane line intersection category feature map;
> determining (4042) a classification loss value based on the sample lane line intersection category feature map and the prediction lane line intersection category feature map; and
> iteratively updating (4043) the initial lane line intersection prediction model based on the classification loss value to obtain the trained lane line intersection prediction model.

10. An apparatus for detecting a lane line intersection, **characterized by** comprising:

> a first determination module (701), configured for determining a to-be-detected image acquired by an ego vehicle during driving;
> a first processing module (702), configured for processing the to-be-detected image based on a lane line intersection prediction model to obtain a lane line intersection category feature map; and
> a second determination module (703), configured for determining coordinates and a category of a lane line intersection in the to-be-detected image based on the lane line intersection category feature map.

11. The apparatus according to claim 10, wherein the first processing module (702) comprises:

> a first processing unit (7021), configured for processing the to-be-detected image based on a first feature sub-model in the lane line intersection prediction model to obtain a first fusion feature map; and
> a first feature extraction unit (7022), configured for performing feature extraction on the first fusion feature map based on a second feature sub-model in the lane line intersection prediction model to obtain the lane line intersection category feature map.

12. The apparatus according to claim 10 or 11, wherein the second determination module (703) comprises:

> a filtering processing unit (7031), configured for performing filtering processing on a plurality of first feature points in the lane line intersection category feature map to obtain one or more second feature points and a category of a lane line intersection corresponding to the second feature point; and
a feature point suppression processing unit (7032), configured for performing feature point suppression processing on the second feature points to determine the coordinates of the lane line intersection in the to-be-detected image and the category of the lane line intersection.

13. An apparatus for training a lane line intersection prediction model, **characterized by** comprising:

> a third determination module (1201), configured for determining a plurality of sample images, coordinates of a plurality of sample intersections corresponding to each of the sample images, and a sample category of each of the sample intersections;
> a generation module (1202), configured for generating a sample heatmap based on the coordinates of the plurality of sample intersections and the sample category of each of the sample intersections;
> a second processing module (1203), configured for processing the sample image based on an initial lane line intersection prediction model to obtain a prediction lane line intersection category feature map; and
> a training module (1204), configured for performing iterative training on the initial lane line intersection prediction model by using the prediction lane line intersection category feature map as an initial training output of the initial lane line intersection prediction model and using the sample heatmap as supervisory information to obtain a trained lane line intersection prediction model.

14. A non-transitory computer readable storage medium, on which a computer program is stored, **characterized by** that the computer program, when executed by a processor (1501), causes the processor (1501) to implement the method for detecting a lane line intersection according to any one of claims 1 to 6, or to implement the method for training a lane line intersection prediction model according to any one of claims 7 to 9.

15. An electronic device (150), **characterized by** comprising:

> a processor (1501); and
> a memory (1502), configured for storing instructions executable by the processor (1501), wherein

the processor (1501) is configured for reading the executable instructions from the memory and executing the executable instructions to implement the method for detecting a lane line intersection according to any one of claims 1 to 6, or the method for training a lane line intersection prediction model according to any one of claims 7 to 9.

determining a to-be-detected image acquired by an ego vehicle during driving /101

processing the to-be-detected image based on a lane line intersection prediction model to obtain a lane line intersection category feature map /102

determining coordinates and a category of a lane line intersection in the to-be-detected image based on the lane line intersection category feature map /103

**FIG. 1**

determining a to-be-detected image acquired by an ego vehicle during driving /101
/102

processing the to-be-detected image based on a first feature sub-model in a lane line intersection prediction model to obtain a first fusion feature map /1021

performing feature extraction on the first fusion feature map based on a second feature sub-model in the lane line intersection prediction model to obtain a lane line intersection category feature map /1022

determining coordinates and a category of a lane line intersection in the to-be-detected image based on the lane line intersection category feature map /103

**FIG. 2**

determining a to-be-detected image acquired by an ego vehicle during driving ⌐101

processing the to-be-detected image based on a lane line intersection prediction model to obtain a lane line intersection category feature map ⌐102

⌐103

performing filtering processing on a plurality of first feature points in the lane line intersection category feature map to obtain one or more second feature points and a category of a lane line intersection corresponding to the second feature point ⌐1031

performing feature point suppression processing on the second feature points to determine coordinates of a lane line intersection in the to-be-detected image and a category of each of lane line intersections ⌐1032

FIG. 3

determining a plurality of sample images, coordinates of a plurality of sample intersections corresponding to each of the sample images, and a sample category of each of the sample intersections ⌐401

generating a sample heatmap based on the coordinates of the plurality of sample intersections and the sample category of each of the sample intersections ⌐402

processing the sample image based on an initial lane line intersection prediction model to obtain a prediction lane line intersection category feature map ⌐403

performing iterative training on the initial lane line intersection prediction model by using the prediction lane line intersection category feature map as an initial training output of the initial lane line intersection prediction model and using the sample heatmap as supervisory information to obtain a trained lane line intersection prediction model ⌐404

FIG. 4

determining a plurality of sample images, coordinates of a plurality of sample intersections corresponding to each of the sample images, and a sample category of each of the sample intersections — 401

generating a sample heatmap based on the coordinates of the plurality of sample intersections and the sample category of each of the sample intersections — 402

processing the sample image based on an initial first feature sub-model in an initial lane line intersection prediction model to obtain a prediction fusion feature map — 4031

performing feature extraction on the prediction fusion feature map based on an initial second feature sub-model in the initial lane line intersection prediction model to obtain a prediction lane line intersection category feature map — 4032

performing iterative training on the initial lane line intersection prediction model by using the prediction lane line intersection category feature map as an initial training output of the initial lane line intersection prediction model and using the sample heatmap as supervisory information to obtain a trained lane line intersection prediction model — 404

FIG. 5

determining a plurality of sample images, coordinates of a plurality of sample intersections corresponding to each of the sample images, and a sample category of each of the sample intersections /401

generating a sample heatmap based on the coordinates of the plurality of sample intersections and the sample category of each of the sample intersections /402

processing the sample image based on an initial lane line intersection prediction model to obtain a prediction lane line intersection category feature map /403

/404

performing filtering processing on the sample heatmap to obtain a sample lane line intersection category feature map /4041

determining a classification loss value based on the sample lane line intersection category feature map and the prediction lane line intersection category feature map /4042

iteratively updating the initial lane line intersection prediction model based on the classification loss value to obtain a trained lane line intersection prediction model /4043

**FIG. 6**

Apparatus 70 For Detecting A Lane
Line Intersection

First Determination Module 701

First Processing Module 702

Second Determination Module 703

**FIG. 7**

Apparatus 70 For Detecting A Lane
Line Intersection

First Determination Module 701

First Processing Module 702

First Processing Unit 7021

First Feature Extraction Unit 7022

Second Determination Module 703

FIG. 8

Apparatus 70 For Detecting A Lane
Line Intersection

First Determination Module 701

First Processing Module 702

First Processing Unit 7021

Feature Extraction Subunit 901

First Feature Fusion Subunit 902

First Feature Extraction Unit 7022

Second Determination Module 703

FIG. 9

Apparatus 70 For Detecting A Lane
Line Intersection

First Determination Module 701

First Processing Module 702

First Processing Unit 7021

First Feature Extraction Unit 7022

Second Feature Fusion Subunit 1001

Probability Transformation Subunit 1002

Second Determination Module 703

FIG. 10

Apparatus 70 For Detecting A Lane
Line Intersection

First Determination Module 701

First Processing Module 702

Second Determination Module 703

Filtering Processing Unit 7031

Feature Point Suppression Processing
Unit 7032

FIG. 11

Apparatus 120 For Training A Lane
Line Intersection Prediction Model

Third Determination Module 1201

Generation Module 1202

Second Processing Module 1203

Training Module 1204

FIG. 12

Apparatus 120 For Training A Lane
Line Intersection Prediction Model

Third Determination Module 1201

Generation Module 1202

Second Processing Module 1203

Second Processing Unit 1301

Second Feature Extraction Unit 1302

Training Module 1204

FIG. 13

Apparatus 120 For Training A Lane
Line Intersection Prediction Model

Third Determination Module 1201

Generation Module 1202

Second Processing Module 1203

Training Module 1204

Filtering Unit 1401

Third Processing Unit 1402

Iteration Unit 1403

FIG. 14

Electronic Device 150

Processor
1501

Memory
1502

Input Means
1503

Output
Means 1504

FIG. 15

## EUROPEAN SEARCH REPORT

Application Number

EP 25 18 7016

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/283591 A1 (EAGELBERG DOR [IL] ET AL) 8 September 2022 (2022-09-08) | 1-5, 10-12, 14,15 | INV. G06V20/56 |
| A | * the whole document * | 6 | |
| X | CN 115 273 011 A (BEIJING HORIZON ROBOTICS TECH RES & DEVELOPMENT CO LTD) 1 November 2022 (2022-11-01) | 7-9,13 | |
| A | * the whole document * | 1-6, 10-12, 14,15 | |
| A | CN 114 581 887 A (SHANGHAI ARTIFICIAL INTELLIGENCE INNOVATION CENTER) 3 June 2022 (2022-06-03) * the whole document * | 1-15 | |

**TECHNICAL FIELDS SEARCHED (IPC)**

G06V

The present search report has been drawn up for all claims

| Place of search | Date of completion of the search | Examiner |
|---|---|---|
| The Hague | 25 August 2025 | Ionescu, Tudor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 7016

This annex lists the patent family members relating to the patent documents cited in the above-mentioned European search report.
The members are as contained in the European Patent Office EDP file on
The European Patent Office is in no way liable for these particulars which are merely given for the purpose of information.

25-08-2025

| Patent document cited in search report | Publication date | Patent family member(s) | Publication date |
|---|---|---|---|
| US 2022283591 A1 | 08-09-2022 | CN 109891194 A | 14-06-2019 |
| | | CN 118010048 A | 10-05-2024 |
| | | DE 202017007710 U1 | 14-11-2024 |
| | | EP 3532801 A2 | 04-09-2019 |
| | | EP 3832263 A1 | 09-06-2021 |
| | | EP 4414661 A1 | 14-08-2024 |
| | | KR 20190080885 A | 08-07-2019 |
| | | KR 20230054911 A | 25-04-2023 |
| | | US 2018120859 A1 | 03-05-2018 |
| | | US 2021072765 A1 | 11-03-2021 |
| | | US 2022283591 A1 | 08-09-2022 |
| | | US 2024345593 A1 | 17-10-2024 |
| | | WO 2018081807 A2 | 03-05-2018 |
| CN 115273011 A | 01-11-2022 | NONE | |
| CN 114581887 A | 03-06-2022 | NONE | |